# EUROPÄISCHE PATENTSCHRIFT

(11) **EP 1 862 397 B1**
(45) Veröffentlichungstag und Bekanntmachung des Hinweises auf die Patenterteilung: **12.08.2009**
(21) Anmeldenummer: 06450078.8
(22) Anmeldetag: 02.06.2006
(51) Int. Cl.: B65D 75/36

(54) **Blister-Deckfolie**
Cover film for blister package
Film de couverture pour emballage du type blister

(43) Veröffentlichungstag der Anmeldung: 05.12.2007
(73) Patentinhaber: Constantia Patz Ges. m.b.H., 2620 Loipersbach (AT)
(72) Erfinder: Piesslinger, Johannes, 3192 Hohenberg (AT)
(74) Vertreter: Patentanwälte BARGER, PISO & PARTNER

(56) Entgegenhaltungen:
- EP-A- 1 468 817
- EP-A- 1 468 935
- EP-A2- 0 657 277
- US-A1- 2004 062 887

## Beschreibung

Die Erfindung betrifft eine Blister-Deckfolie entsprechend dem Oberbegriff des Anspruches 1 und der weiter unten gewürdigten EP 1 468 817 A.

Blisterverpackungen an sich sind seit langem bekannt. Sie bestehen aus einer sogenannten Blister-Bodenfolie, in die die Näpfe thermisch bzw. kalt geformt, und anschließend die Pulver, Pillen, Kapseln etc. eingelegt werden, und einer undurchsichtigen, meist bedruckten, Blister-Deckfolie, oft auch kurz Blisterfolie genannt. Die einfachsten Blisterverpackungen weisen Blister-Bodenfolien auf, die durchsichtig sind und Blister-Deckfolien, durch die der Inhalt durchgedrückt werden kann, wobei die Blister-Deckfolien aufreißen.

Einen guten Überblick über komplexere Blisterverpackungen geben die oben genannte EP 1 468 817 A und die EP 1 468 935 A.

Es gibt unterschiedliche Weiterentwicklungen der eingangs genannten Grundform, wie sie teilweise auch in den beiden Druckschriften dargelegt sind. Dazu zählt die Ausbildung undurchsichtiger Blister-Bodenfolien, um die verpackten Gegenstände vor Lichtzutritt zu schützen, aber auch, um sie Kindern nicht optisch darzubieten und sie so nicht zum Hantieren mit der Verpackung und deren Inhalt zu verleiten, die Ausbildung tropentauglicher Blisterverpackungen und dergleichen mehr.

Eine Weiterentwicklung, die insbesondere, aber nicht ausschließlich, in den USA seit einiger Zeit vermehrt verwendet wird, ist die eingangs erwähnte Ausbildung sogenannter kindersicherer, aber senierenfreundlicher, Verpackungen. Es handelt sich dabei um Verpackungen, bei denen sowohl die Blister-Bodenfolie als auch die Blister-Deckfolie so stabil ist, dass es nicht möglich ist, den Inhalt durch die Folie durchzudrücken, oder durch die Folie zu beißen, solange man nicht zuvor verschiedene Maßnahmen getroffen hat, von denen die Vorschriften vermuten, dass sie wohl von Senioren, nicht aber von Kindern durchgeführt werden können. Diese Maßnahmen beruhen auf der Tatsache, dass bei diesen Blisterverpackungen die Blister-Deckfolie verstärkt ausgebildet ist und der, vom verpackten Gut gesehen, außen angeordnete Teil der Folie mechanisch so stark ist, dass ein Durchdrücken des Inhaltes schwer möglich ist. Es muss daher dieser Teil der Blister-Deckfolie, die Sicherungslage, vor dem möglichen Zugang zum Inhalt abgezogen (abgepeelt) werden und erst anschließend kann der auf der Verpackung verbleibende Teil der BlisterDeckfolie, die Gutlage, vom Gut durchstoßen werden.

Darüber hinaus baut man noch dadurch eine Sicherung ein, dass das Abziehen der Sicherungslage nur von Bereichen der Blister-Deckfolie aus möglich ist, die bei der fabriksneuen Packung im Inneren der Fläche der mehrere Blister aufweisenden Verpackung liegt, sodass zu aller erst diese Verpackung durch Teilen entlang von Sollbruchstellen in Einzelblister zerlegt werden muss, sodann kann die außenliegende Sicherungslage abgezogen werden und dann erst kann die innere Blister-Deckfolie, die Gutlage, durch Eindrücken der Blisterfolie vom Gut durchstoßen werden und das Gut bestimmungsgemäß verwendet werden.

Es gibt noch eine andere Art von Blisterverpackungen, nämlich für solche Gegenstände, die mechanisch sensibel oder instabil sind und es nicht ohne Beschädigung oder gar Zerstörung ertragen würden, wenn man sie als Werkzeug beim Durchstoßen der Blister-Deckfolie verwendete. Für diese Güter wird eine Blister-Deckfolie verwendet, die im wesentlichen so aufgebaut ist wie die oben genannte Blister-Deckfolie, bei der aber das Abziehen der Sicherungslage von der Gutlage durch Verwendung eines entsprechend kräftigen Klebstoffes bzw. Haftvermittlers nicht möglich ist. Dafür wird auf an sich ebenfalls bekannte Weise die Möglichkeit geschaffen, nach der Abtrennung eines einzelnen Blisters dessen gesamte Blister-Deckfolie von der Blister-Bodenfolie abzuziehen und so Zutritt zur verpackten Ware zu erhalten.

In beiden Fällen, mit dem einzigen Unterschied des verwendeten Klebstoffs bzw. Haftvermittlers zwischen der Sicherungslage und der Gutlage der Blister-Deckfolie, ist deren Aufbau, bei der fertigen Verpackung von außen nach innen betrachtet, im allgemeinen folgender, wobei aber gegebenenfalls noch weitere Schichten vorhanden sein können:
a) eine Druckschutzschichte,
b) eine Druckschichte,
c) eine Schichte Druckvorlack,
d) eine Papierschicht, die den Druckgrund bildet,
e) ein Klebstoff bzw. Haftvermittler,
f) eine Kunststofffolie, insbesondere Polyester, Polyamid, etc.,
g) peelfähiger oder nicht peelfähiger Klebstoff bzw. Haftvermittler,
h) Aluminium,
i) Heißsiegellack

Von den Folienherstellern werden dabei die zusammengefügten Schichten vom Druckvorlack c) bis zum Heißsiegellack i) als Vorprodukt gefertigt und in dieser Form zum Bedrucken und Füllen geliefert, bzw. nach dem Bedrucken zum Füllen geliefert. Die Schichten c) bis f) bilden die Sicherungslage, die Schichten h) und i) die Gutlage, die Klebstoffschichte g) kann nach Gutdünken keiner, einer oder beiden Lagen zugeordnet werden. Die Bedeutung und Aufgabe der einzelnen Schichten des Vorprodukts, kurz dargestellt, ist folgende:
Ad c) Der Druckvorlack schafft eine standardisierte und für die Bedruckung günstige Oberfläche.
Ad d) Die Papierschicht bildet die Grundlage für die Bedruckung, trägt zur Festigkeit bei.
Ad e) Der Klebstoff bzw. Haftvermittler dient zur Verbindung mit dem
Ad f) Kunststoff, der bevorzugt eine Polyester- bzw. Polyamidfolie ist und insbesondere die mechanische Stabilität für die Schaffung der "Kindersicherheit" liefert.
Ad g) Die Klebschicht ist, wenn es sich um eine Blisterpackung zum Durchdrücken des Gutes handelt peelfähig oder aber, wenn es sich um eine vollständig zu öffnende Blisterpackung handelt, nicht peelfähig ausgebildet.

Ad h) Die Aluminiumfolie dient der ausreichenden Umhüllung des Gutes, ist licht-, dampf-und wasserundurchläßig und doch mechanisch ausreichend verletzbar, um bei der ersten Variante der Blisterverpackungen vom Gut durchstoßen werden zu können.

Ad i) Der Heißsiegellack dient nur dazu, bei der Fertigstellung der bereits gefüllten Verpackung die Blister-Deckfolie mit der Blister-Bodenfolie zu verbinden.

So aufgebaute Folien bzw. Verpackungen sind seit längerem bekannt und weisen trotz ihrer weltweiten Verbreitung zwei Arten von Mängeln auf:

Beim Versiegeln der Blister-Deckfolie mit der Blister-Bodcnfolie muss die Siegelwärme von der Blister-Deckfolienseite her zugeführt werden und dabei bildet die verwendete Papierlage eine Art von Isolierung, die den Wärmefluss verlangsamt und die Verwendung längerer Siegelzeiten bzw. höherer Siegeltemperaturen notwendig macht. Dies ist einerseits wegen den angestrebten hohen Taktraten bei der Herstellung nachteilig, andererseits weil es zahlreiche zu verpackende Waren gibt, die thermische Belastungen nicht oder nur schlecht ertragen. Es ist allgemein bekannt, dass insbesondere zahlreiche Medikamente unter der Einwirkung erhöhter Temperatur, insbesondere wenn diese länger einwirkt, Schaden nehmen.

Ein zweiter Nachteil der Folien gemäß dem Stand der Technik tritt ebenfalls bei der Finalisierung der Verpackung auf: Durch das Abtrennen der zumeist 6, 8, 12, 24 od.dergl. Näpfchen umfassenden Einheiten aus dem Endlosmaterial werden unweigerlich Papierstäube, Fussel, Fasern, etc. freigesetzt, die trotz aller Vorsichtsmaßnahmen wie Absaugungen, Abschottungen etc. immer wieder auch ihren Weg in die Bereiche der Abfüll- und Abpackstationen finden, in denen die einzelnen verformten Näpfe der Blisterverpackung noch offen sind, sodass derartige Stäube und Fasern verschiedentlich mit dem eigentlichen Gut in einer solchen Blisterverpackung eingesiegelt werden und zum Konsumenten, meist Patienten, gelangen. Aus der EPO 657 277 A ist es bei der Herstellung Sauerstoff absorbierender Päckchen zur Verwendung in Verpackungen von Lebensmitteln, die mittels Mikrowelle erwärmt werden, bekannt, dass bei Benutzung von Trägerbändern aus Kunststoff oder Metallfolie anstelle von Papier keine Papierstäube anfallen.

Wenn man bedenkt, dass die Herstellung des gesamten Verpackungsmaterials in Reinräumen erfolgen muss, deren Spezifikation nur knapp unter der Reinraumspezifikation für die Herstellung der Medikamente liegt, stellt dies eine den Konsumenten stark verstörende und für den Medikamentenhersteller sehr unerwünschte Begleiterscheinung dar.

Es ist Ziel der Erfindung, eine Verpackung der eingangs genannten Art anzugeben, die diese Nachteile nicht aufweist.

Erfindungsgemäß werden diese Ziele dadurch erreicht, dass statt der Papierschicht eine Aluminiumfolie in die ansonsten gleich ausgebildete Blister-Deckfolie integriert wird. Dies macht keine Änderung des Herstellungsverfahrens notwendig, es können die selben Apparate und Vorrichtungen verwendet werden wie bisher und es wird, was besonders wichtig ist, an der den verpackten Waren zugewandten Seite der Abdeckfolie keinerlei Änderung vorgenommen. Es ist dabei zu bedenken, dass jede derartige Folie speziell für die Verwendung mit bestimmten Gruppen oder Klassen von Medikamenten zugelassen ist.

Durch die Verwendung einer Aluminiumfolie, bevorzugt aus Weichaluminium mit einer Dicke von etwa 0,015 mm, werden die Probleme der Faserbildung beim Konfektionieren der Packungen vollständig vermieden und es wird der Wärmedurchgang beim Heißsiegeln wesentlich verbessert, sodass sowohl die Taktzeiten erhöht als auch die thermische Belastung der verpackten Gegenstände verringert werden kann. Durch die Verwendung von an das Aluminium angepassten Druckvorlack erfolgt auch keine Änderung in den Eigenschaften für die Bedruckung der Blister-Deckfolie auf ihrer Außenseite.

Besonders günstige Ergebnisse erzielt man mit einer Blister-Deckfolie, bei der der Druckvorlack c) mit einem mittleren Auftragsgewicht von 1,5 g/m² aufgetragen wird. Er besteht vorzugsweise aus Nitrozellulose, Harnstoffharz und Acrylharz und ist weichmacherfrei.

Die erfindungsgemäß verwendete Aluminiumschicht d) besteht aus sogenanntem (Weich)-Aluminium, einer Legierung mit zumindest 98,0 Gewichtprozent Aluminium nach EN 573. Diese Legierung ist von den verschiedenen dafür zuständigen Gremien und Normen bzw. Standards in den meisten Ländern der Welt, darunter Österreich, Deutschland, Frankreich und USA für die Verwendung im Zusammenhang mit Lebensmitteln bzw. Medikamenten zugelassen.

Als Klebstoff bzw. Haftvermittler der Schichte e) wird ein Ein- bzw.Zweikomponentenkleber verwendet, der ebenfalls in den meisten Jurisdiktionen der Welt für derartige Zwecke zugelassen ist.

Die Kunststofffolie f) besteht bevorzugt aus Polyester bzw. Polyamid mit einer Dicke von 0,012 - 0,025 mm und ist ebenfalls vom Zulassungsstandpunkt her abgesichert.

Die peelfähige oder nichtpeelfähig ausgebildete Klebstoffschichte g) ist ebenso wie die anschließende Aluminiumschichte h) nach dem Stand der Technik ausgebildet und daher dem Fachmann leicht zugänglich.

Das gleiche gilt auch für den Heißsiegellack i), der bevorzugt mit einer Auftragsmasse von etwa 3,0-8,0 g/m² verwendet wird.

Die genannten Werte sind rein als Beispiel zu verstehen und können in Abhängigkeit von den zur Verfügung stehenden Maschinen und dem Verwendungszweck, das heißt insbesondere den Eigenschaften und der Größe der verpackten Waren, in relativ weiten Grenzen variieren.

Es kann die Erfindung bei all den im Stand der Technik bekannten kindersicheren Blister-Deckfolien verwendet werden, insbesondere bei allen in den beiden eingangs genannten Druckschriften erläuterten Folien.

## Patentansprüche

1. Blister-Deckfolie für die Versiegelung gegen eine bestehende Blister-Bodenfolie, wobei die Blister-Deckfolie, von Außen nach Innen bei der fertiggestellten Verpackung betrachtet, zumindest die folgenden Schichten aufweist: eine Schichte Druckvorlack (c), eine Schichte Druckgrundlage (d), eine Schichte Klebstoff (e), eine Schichte Kunststofffolie (f), eine Schichte von gegebenenfalls peelfähigem Klebstoff (g), eine Schichte Aluminium (h) und eine Schichte Heißsiegellack (i), **dadurch gekennzeichnet, dass** die Druckgrundlagenschichte (d) eine Aluminiumschichte ist.

2. Blister-Deckfolie nach Anspruch 1, **dadurch gekennzeichnet, dass** die Aluminiumschichte (d) aus Aluminium mit einer Dicke zwischen 0,008 und 0,030 mm besteht.

3. Blister-Deckfolie nach Anspruch 1, **dadurch gekennzeichnet, dass** die Aluminiumschichte (d) aus Weich-Aluminium besteht.

## Claims

1. Blister cover film for sealing against an existing blister base film, the blister cover film comprising at least the following layers, from the outside to the inside of the finished packaging: a layer of printing undercoat (c), a layer of printing primer (d), a layer of adhesive (e), a layer of plastics material film (f), a layer of optionally peelable adhesive (g), a layer of aluminium (h) and a layer of heat sealing lacquer (i), **characterised in that** the printing primer layer (d) is an aluminium layer.

2. Blister cover film according to claim 1, **characterised in that** the aluminium layer (d) consists of aluminium with a thickness of between 0.008 and 0.030 mm.

3. Blister cover film according to claim 1, **characterised in that** the aluminium layer (d) consists of soft aluminium.

## Revendications

1. Feuille de couverture de blister, à sceller avec une feuille de support de blister existante, laquelle feuille de couverture de blister comporte au moins les couches suivantes, depuis l'extérieur vers l'intérieur de l'emballage fini : une couche de prélaque pour impression (c), une couche de fond pour impression (d), une couche de colle (e), une couche de plastique (f), une couche de colle éventuellement pelable (g), une couche d'aluminium (h) et une couche de laque de thermoscellage (i), **caractérisée en ce que** la couche de fond pour impression (d) est une couche en aluminium.

2. Feuille de couverture de blister, conforme à la revendication 1, **caractérisée en ce que** la couche d'aluminium (d) est une couche constituée d'aluminium qui est épaisse de 0,008 à 0,030 mm.

3. Feuille de couverture de blister, conforme à la revendication 1, **caractérisée en ce que** la couche d'aluminium (d) est constituée d'aluminium doux.
